# EUROPÄISCHE PATENTSCHRIFT

(11) **EP 2 263 334 B1**
(45) Veröffentlichungstag und Bekanntmachung des Hinweises auf die Patenterteilung: **25.01.2012**
(21) Anmeldenummer: 09729837.6
(22) Anmeldetag: 09.03.2009
(51) Int. Cl.: H04B 17/00

(54) **TESTGERÄT ZUM TESTEN DER ÜBERTRAGUNGSQUALITÄT EINES FUNKGERÄTS**
TEST DEVICE FOR TESTING THE TRANSMISSION QUALITY OF A RADIO DEVICE
APPAREIL DE TEST POUR TESTER LA QUALITÉ DE TRANSMISSION D'UN APPAREIL RADIO

(30) Priorität: 11.04.2008 DE 102008018385
(43) Veröffentlichungstag der Anmeldung: 22.12.2010
(73) Patentinhaber: Rohde & Schwarz GmbH & Co. KG, 81671 München (DE)
(72) Erfinder: HARTENECK, Moritz, 82008 Unterhaching (DE)
(74) Vertreter: Beder, Jens
(86) Internationale Anmeldenummer: PCT/EP2009/001673
(87) Internationale Veröffentlichungsnummer: WO 2009/124626

(56) Entgegenhaltungen:
- EP-A- 1 095 480
- GB-A- 2 440 190
- EDITOR (MOTOROLA): "Update of TS36.213 according to changes listed in cover sheet" 3GPP DRAFT; R1-081158 - 36213 CR0002 (REL-8,F) UPDATE 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG1, Nr. Sorrento, Italy; 20080211, 28. Februar 2008 (2008-02-28), XP050109594
- M. HARTENECK: "LTE - der "Physical Layer" auf dem Prüfstand"[Online] 2009, XP002537743 Gefunden im Internet: URL:http://www.elektroniknet.de/home/messe ntesten/fachwissen/uebersicht/l/hf-messger aete/lte-der-physical-layer-auf-dem-pruefs tand/druckversion/> [gefunden am 2009-07-17]

## Beschreibung

Die Erfindung betrifft ein Testgerät zum Testen eines Funkgeräts.

Ständig steigende Anforderungen an Funkgeräte führten und führen zu einer rasanten Weiterentwicklung von Funkstandards, d.h. von Übertragungsstandards von Funkgeräten. Um immer größere Datenraten und immer geringere Fehlerraten zu bekommen, werden Funkstandards immer komplexer. Deshalb werden auch die Testgeräte zum Testen der Übertragungen der Funkgeräte immer komplexer.

Eine wichtige Entwicklung war und ist die gleichzeitige Übertragung mehrerer Kanäle. So werden in Mobilfunksystemen der 3. Generation wie z.B. UMTS mehrere Kanäle durch Kodierung gleichzeitig übertragen. Mobilfunksysteme der 4. Generation (LTE, Long Term Evolution) verwenden dazu unter anderem orthogonale Frequenzmultiplexverfahren (OFDM / OFDMA), Orthogonal Frequency Division Multiplexing / Orthogonal Frequency Division Multiple Acces). Dabei werden die verschiedenen Kanäle auf zahlreichen zueinander orthogonalen Trägerfrequenzen innerhalb einer festgelegten Bandbreite parallel gesendet. Durch die Orthogonalität der Trägerfrequenzen erreicht man eine große Anzahl von Trägerfrequenzen, die in der Größenordnung von Tausend liegt, die allerdings auch stark überlappen.

Eine weitere Entwicklung war und ist die Möglichkeit die übertragungsparameter wie z.B. Übertragungsleistung, Modulationsart, Codierung und vor allem bei OFDM die verwendeten Trägerfrequenzen an die Bedingungen der Funkübertragung flexibel anzupassen, um die Übertragung im Sinne einer möglichst effizienten, d.h. fehlerfreien und gleichzeitig leistungsarmen, Übertragung zu optimieren. Dafür ist aber eine zuverlässige und nach Übertragungsparametern aufgeschlüsselte Fehlererkennung unerlässlich. Um grundsätzlich eine Fehlererkennung zu ermöglichen, werden neben den Nutzdaten auch Prüfsummen zur Erkennung von Fehlern in den Übertragungsblöcken übertragen.

Die deutschen Offenlegungsschrift DE 10 2005 016 585 A1 offenbart ein Testgerät zum Testen von Mobilfunkgeräten der 3. Generation, das der steigenden Komplexität der Übertragungsstandards vor allem in Bezug auf steigende Flexibilisierung und Parallelisierung Rechnung trägt. Dabei werden verschiedene Datenteilströme mit jeweils unterschiedlichen Sätzen von Übertragungsparametern erzeugt und in aufeinanderfolgenden Zeitschlitzen gesendet. Das zu testende Gerät wertet die empfangenen Übertragungsblöcke dieser Datenteilströme aus und sendet dem Testgerät bei korrekter Übertragung ein positives bzw. bei nicht korrekter Übertragung ein negatives Signal an das Testgerät. Das Testgerät kann nun durch Zählen der negativen Signale in Bezug auf alle Signale pro Datenteilstrom eine individuelle Fehlerrate pro Satz Übertragungsparameter erstellen.

Diese Methode eignet sich aber nicht zum Testen von Mobilfunkgeräten der 4. Generation, die OFDM verwenden. Die Funkübertragung von Signalen wird durch viele frequenzabhängige Effekte auf der Übertragungsstrecke wie Fading, Interferenz durch Reflexionen, Absorptionen, Beugungseffekte, usw. gestört. Die Frequenzabhängigkeit dieser Störungen nutzt z.B. LTE aus, um die qualitativ besten Trägerfrequenzen für die Kommunikation mit dem Funkgerät auszusuchen und somit einen optimalen Satz Trägerfrequenzen zur Übertragung zu finden. Die deutsche Offenlegungsschrift sieht aber keine Methode zum individuellen Testen verschiedener Frequenzen vor.

Zum Testen von realen Signalbedingungen müssen die frequenzabhängigen Störungen in der Übertragung simuliert werden. Es ist bekannt, dass Störungen in Funkübertragungen durch ein externes Hinzufügen von Rauschen, meist weißen Rauschens, simuliert werden kann. Dabei kann mit der Varianz des Rauschens die Stärke der Störung variiert werden. Weißes Rauschen enthält aber alle Frequenzen zu gleichen Anteilen und eignet sich somit nicht um frequenzabhängige Störungen zu simulieren. Vor allem wenn die Stärke des Rauschens je Trägersignal variierbar sein soll.

Ein Rauschen zu erstellen, das in bestimmten Frequenzbereichen eine bestimmten Stärke hat ist technisch schwer zu realisieren und vor allem teuer. Dazu bedarf es einer komplizierten Hintereinanderschaltung von Hoch- und Tiefpassfiltern und eine aufwendige Überlagerung der so erzeugten frequenzspezifischen Rauschprozesse. Zusätzlich nachteilig an diesem Verfahren ist es, dass sich durch die endliche Flankensteilheit der Filter und durch die Überlappung der Trägerfrequenzen der sehr schmale Frequenzbereich einer einzelnen Trägerfrequenz nicht ausreichend genau einstellen lässt.

Aus der GB 2 440 190 A ist es bekannt, zu übertragende Daten so zu bearbeiten, dass sie realen Bedingungen einer Funkübertragung entsprechen. Dies betrifft auch die Rauschanteile, welche dem zu übertragenden Signal hinzugefügt werden.

Es ist Aufgabe der Erfindung, die oben beschriebenen Nachteile des Stands der Technik zu beheben. Die Aufgabe der Erfindung ist es, ein Testgerät zu schaffen, das frequenzabhängige Störungen im Sendesignal simulieren kann und somit die Auswahl einer Anzahl qualitativ bester Trägerfrequenzen durch ein empfangendes Funkgerät testen kann.

Bei dem erfindungsgemäßen Testgerät werden zunächst durch eine in der Abbildungsvorrichtung festgelegte Abbildungsvorschrift mehrere Datenteilströme, aus den zu übertragenden Informationen, d.h. aus den zu übertragenden Daten, erzeugt. Diese Datenteilströme werden zu Erzeugung einer Parallelen Übertragung der Information in parallelen Signalen auf verschiedene Trägerfrequenzen aufmoduliert. Solange die einzelnen Signale der Trägerfrequenzen (subcarrier) noch in der ungemischten Form vorliegen, fügt eine Verrauschvorrichtung selektiv jeweils einen Rauschanteil zu jeweils einem Signal einer Trägerfrequenz für mindestens einen Teil der Signale um frequenzabhängige Störungen zu simulieren. Eine Sendevorrichtung sendet die resultierenden Signale der verschiedenen Trägerfrequenzen, d.h. die Signale der einzelnen Trägerfrequenzen plus den zu diesen Signalen jeweils hinzugefügten Rauschanteil. Eine Empfangsvorrichtung empfängt ein von einem zu testenden Funkgerät zurückgeschicktes Antwortsignal, das durch eine Analysevorrichtung ausgewertet wird.

Bei dem erfindungsgemäßen Testgerät ist es vorteilhaft, dass das zu testende Gerät durch frequenzabhängige Störungen, wie sie in unserem Umfeld häufig auftreten, belastet wird. Durch das selektive Hinzufügen der Rauschanteile auf die noch nach ihrer Trägerfrequenz aufgeschlüsselt vorliegenden Signale, kann das frequenzabhängige Rauschen einfach und kostengünstig simuliert werden, ohne komplexe Filter zum Erzeugen von frequenzabhängigem Rauschen zu implementieren.

Die Unteransprüche betreffen vorteilhafte Weiterbildungen des erfindungsgemäßen Testgeräts.

Insbesondere ist es vorteilhaft, durch die Analysevorrichtung die Qualität der Übertragung pro Trägerfrequenz aus dem Antwortsignal zu extrahieren und auszuwerten. Dadurch kann getestet werden, ob das zu testende Gerät die richtigen, d.h. die effizientesten, Trägersignale in dem Antwortsignal an das Testgerät zurückgibt. Dadurch ist eine realistischere Abschätzung der Fehlerrate bzw. der Qualität des Funkgeräts möglich.

Weiterhin ist es vorteilhaft, vor allem Funkgeräte, die OFDM als Übertragungstechnik verwenden, mit dem erfindungsgemäßen Testgerät zu testen, da OFDM eine sehr hohe Anforderung an Testgeräte zum frequenzselektiven Testen von Funkgeräten stellt.

Die Erfindung bezieht sich auf alle Testgeräte für Funkgeräte, die Frequenzmultiplexverfahren verwenden und vor allem diejenigen, die OFDM verwenden. Dabei richtet sich das Anwendungsgebiet vor allem auf die mobile Telefonie und alle Geräte, die Übertragungsstandards des Mobilfunks wie z.B. LTE verwenden. Aber auch andere Funkgeräte die OFDM unterstützen z.B. im Bereich von wireless local area networks wie WiMax, im Bereich von personal area networks wie der WiMedia / Ecma-368 Standard oder im Bereich der terrestrischen Übertragung von digitalem Fernsehen und Radio wie DVB-T, DVB-H, T-DMB und wie EUREKA 147 DAB, Digital Radio Mondiale, HD-Radio, T-DMB können durch das erfindungsgemäße Testgerät getestet werden.

Ein Ausführungsbeispiel der Erfindung wird nachfolgend unter Bezugnahmen auf die Zeichnung näher beschrieben. In der Zeichnung zeigen:
- Fig. 1: ein Ausführungsbeispiel des erfindungsgemäßen Testgeräts;
- Fig. 2: ein Ausführungsbeispiel eines frequenzselektiven Rauschmusters.

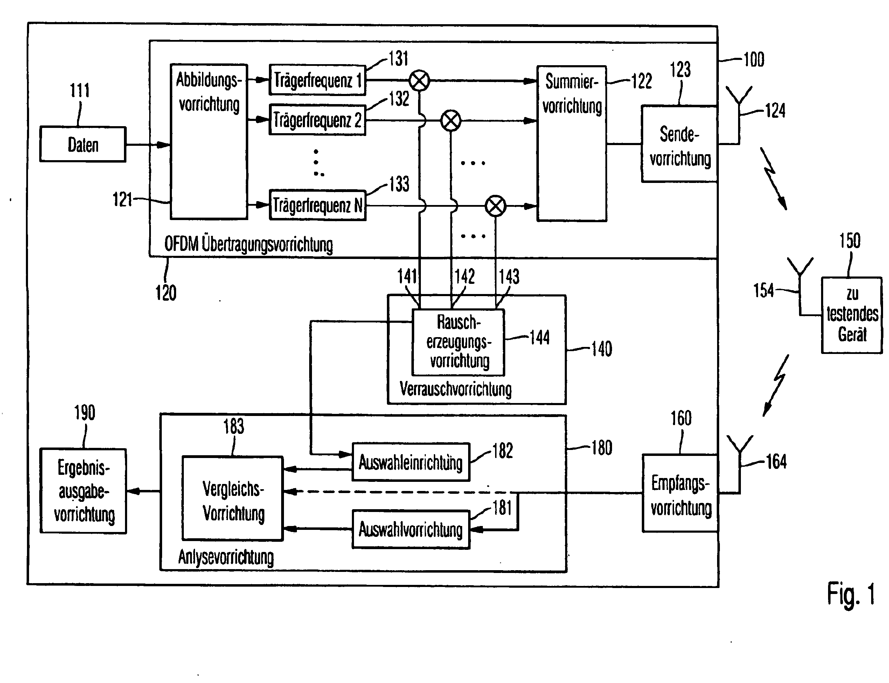

Fig. 1 zeigt ein mögliches Ausführungsbeispiel des erfindungsgemäßen Testgeräts. Das Testgerät 100 besteht aus einer OFDM Übertragungsvorrichtung 120, einer Verrauschvorrichtung 140, einer Empfangsvorrichtung 160, einer Analysevorrichtung 180 und einer Ergebnisausgabevorrichtung 190.

Zusätzlich zu dem Testgerät 100 ist ein zu testendes Mobilfunkgerät 150 als Funkgerät abgebildet, das Signale von dem Testgerät 100 empfangen und ein Antwortsignal senden kann. Hier umfasst ein Mobilfunkgerät 150 alle mobilen Funkgeräte, die Frequenzmultiplexverfahren (FDM FDMA) und im speziellen orthogonale Frequenzmultiplexverfahren (OFDM / OFDMA) und deren Weiterentwicklungen zur Übertragung verwenden.

Im Folgenden wird ein mögliches Ausführungsbeispiel des erfindungsgemäßen Testgeräts beschrieben:

Zuerst erzeugt das Testgerät 100 zu übertragende Daten 111. Die Daten 111 können durch einen Pseudo-Zufallsgenerator erzeugt werden oder auch aus einem festgelegten Testdatensatz bestehen. Alternativ können die Daten auch durch eine Eingabeschnittstelle in das Testgerät 100 importiert werden. Die Daten liegen in Form eines Datenstroms, d.h. einer zeitlichen Abfolge von Bits vor. Dies wird weiterhin auch als serielle Daten bezeichnet.

Die OFDM Übertragungsvorrichtung 120 parallelisiert die Daten 111 und erzeugt so Datenteilströme. Das Testgerät 100 sendet diese auf verschiedenen orthogonalen Trägerfrequenzen. Dazu werden die seriellen Daten 111 in die Abbildungsvorrichtung 121 eingegeben und dort in N parallele Datenteilströme aufgeteilt, die jeweils wieder aus einer Abfolge von Bits bestehen. Dies kann z.B. durch das Zerteilen des seriellen Datenstroms 111 in Datenblöcke der Länge L geschehen. Alternativ ist es auch wie beim Interleaving möglich, die im seriellen Datenstrom 111 benachbarten Bits auf die N parallelen Datenströme zu verteilen, um Fehler kausal zusammenhängender Datenblöcke zu vermeiden. Die N parallelisierten Datenströme werden mittels eines digitalen Modulationsverfahrens wie QPSK (Quadrature Phase Shift Keying), QAM (Quadrature Amplitude Modulation), usw. auf die N Trägerfrequenzen moduliert. Alternativ können auch für verschiedene Trägerfrequenzen unterschiedliche Modulationsverfahren verwendet werden, um der unterschiedlichen Übertragungsqualität Rechnung zu tragen. Die Abbildungsvorrichtung 121 schickt die N mit den Basisbandsignalen der Datenteilströme modulierten Trägersignale 131, 132, ..., 133 an die Summiervorrichtung 122, wobei ein Trägersignal 131, 132, ..., 133 das auf eine Trägerfrequenz fl aufmodulierte Signal ist, welches aus dem mittels des entsprechenden Modulationsverfahrens übersetzten entsprechenden parallelisierten Datenteilstrom besteht.

Um für den Test des Mobilfunkgeräts 150 eine realistische Signalübertragung, d.h. eine realistische Übertragung aller Trägersignale 131, 132, ..., 133, zu simulieren, werden die einzelnen Trägersignale 131, 132, ..., 133 mit Rauschen gestört. Dabei kann eine Verrauschvorrichtung 140 jedes einzelne Trägersignal 131, 132, ..., 133 individuell mit einem Rauschen 141, 142, ..., 143 einer bestimmten Stärke belegen. Durch das frequenzselektive Hinzufügen von Rauschanteilen unterschiedlicher Stärke auf die noch nicht gemischten oder überlagerten Trägersignale wird die unterschiedliche Übertragungsqualität bzw. deren Störungen verschiedener Trägersignale simuliert. Die Anzahl der verrauschten Trägerfrequenzen kann zwischen 1 und der Anzahl N der Trägerfrequenzen liegen.

Der jeweilige Rauschanteil 141, 142, ..., 143, das dem jeweiligen Trägersignal 131, 132, ..., 133 hinzugefügt wird, wird in der Rauscherzeugungseinrichtung 144 erzeugt. Alternativ kann der jeweilige Rauschanteil 141, 142, ..., 143 für das jeweilige Trägersignal 131, 132, ..., 133 durch eine Schnittstelle von außerhalb des Testgeräts 100 in die Verrauschvorrichtung eingegeben werden. Die Information, welche Trägersignale verrauscht werden und wie stark diese verrauscht werden, kann z.B. in der Rauscherzeugungsvorrichtung fest gespeichert sein oder alternativ durch eine Schnittstelle von außerhalb des Testgeräts 100 eingegeben werden. Diese Information wird für eine spätere Verwendung an die Analysevorrichtung 180 geschickt.

Die durch das selektive Verrauschen der Trägersignale 131, 132, ..., 133 resultierenden Trägersignale werden in der Summiervorrichtung 122 zu einem Signal zusammengefügt. Dabei werden die einzelnen resultierenden Trägersignale, die bis jetzt in einer Frequenzdarstellung im Fourierraum vorliegen durch eine inverse Fouriertransformation in den Zeitraum transformiert. Dies wird im allgemeinem mit dem Algorithmus der IFFT (Inverse Fast Fourier Transform) oder der IDFT (Inverse Discrete Fourier Transform) gemacht. Daraufhin werden die resultierenden Trägersignale im Zeitraum zu einem Sendesignal aufaddiert und an die Sendevorrichtung 123 geschickt. Die Sendevorrichtung 123 verfügt über eine Antenne 124, mit der das aus den in den Zeitraum transformierten und addierten resultierenden Trägersignalen bestehende Sendesignal gesendet wird. Alternativ kann die Sendevorrichtung über mehrere Antennen 124 verfügen und die einzelnen resultierenden Trägersignale im Zeitraum oder auch Teilsummen von diesen senden.

Das zu testende Mobilfunkgerät 150 empfängt über eine Antenne 154 das Sendesignal. Nach der Extrahierung der einzelnen Trägersignale 131, 132, ..., 133 aus dem Sendesignal, wird entsprechend des verwendeten Standards ein Antwortsignal erstellt und an die Empfangsvorrichtung 160 des Testgeräts 100 zurückgesendet. Im Falle von OFDM muss das Antwortsignal eine Information über die Qualität der übertragenen Daten pro Trägersignal, d.h. der Übertragungsqualität pro Trägerfrequenz, enthalten. Die Information über die Qualität kann z. B. in Form eines CQI (Channel Quality Indicator) vorliegen. Auf Basis eines Signal/Rauschverhältnisses (SNR; Signal to Noise Ratio) wird der CQI ermittelt, wobei zur Abschätzung der SNR Pilotsignale eines Mobilfunksignals verwendet werden. Dies erfolgt in an sich bekannter Weise, weswegen auf eine detaillierte Ausführung verzichtet werden kann. Diese Qualitätsinformation wird mit einem Antwortsignal wieder an das Testgerät 100 zurückgeschickt.

Das Testgerät 100 empfängt über eine Antenne 164 mit der Empfangsvorrichtung 160 das Antwortsignal. Die Antenne 164 kann mit der Antenne 124 der Sendevorrichtung übereinstimmen, andererseits kann die Empfangsvorrichtung 160 auch mehrere Antennen enthalten, falls es sich um sogenannte Mehrantennensystem (MIMO, Multiple Input Multiple Output) handelt. Das gleiche gilt natürlich auch für das Mobilfunkgerät 150. Eine nicht gezeigte Vorrichtung digitalisiert die übertragenen Daten aus dem Antwortsignal und schickt diese an die Analysevorrichtung 180.

Das Antwortsignal wird in der Analysevorrichtung 180 analysiert und ein Testergebnis wird mittels eines Soll Ist Vergleichs erzielt. In einer ersten Auswahlvorrichtung 181 wird eine einstellbare Anzahl qualitativ bester Kanäle bzw. deren Trägerfrequenzen basierend auf den Information aus dem Antwortsignal ausgewählt und z.B. mit einem Kanalqualitätsindex (CQI, Channel Quality Index) gespeichert. Der CQI erlaubt es, eine Liste einer Anzahl k von Kanälen bzw. von Trägerfrequenzen zu erstellen, wobei die enthaltenen Trägerfrequenzen angefangen mit der qualitativ am besten übertragenden Trägerfrequenz (höchster CQI) bis zur qualitativ am k.-besten übertragenden Trägerfrequenz absteigend (CQIₖ) sortiert sind. Alternativ ist es natürlich denkbar, dass die k besten Trägerfrequenzen in umgekehrter Reihenfolge oder nicht sortiert gespeichert werden. Eine Anzahl k bedeutet hier eine Zahl zwischen 1 und der Anzahl N der Trägerfrequenzen. Die Information über die ausgewählten k besten Trägerfrequenzen, z.B. der CQI wird an die Vergleichsvorrichtung 183 geschickt. Die erste Auswahlvorrichtung 181 kann auch im Mobilfunkgerät enthalten sein, das dann direkt eine Liste auf Basis der CQIs erstellt und an das Testgerät 100 schickt. Die Empfangseinheit 160 schickt in letzterem Fall das digitalisierte Antwortsignal direkt an die Vergleichseinrichtung 183 (gezeigt durch einen gestrichelten Pfeil) anstatt an die Auswahleinrichtung 181.

Eine zweite Auswahlvorrichtung 182 berechnet auf die gleiche Weise wie die erste Auswahleinrichtung 181 die k qualitativ besten Trägerfrequenzen, z.B. das jeweilige CQI, jetzt basierend auf der Information des Rauschanteils je Trägerfrequenz stammend von der Verrauschvorrichtung 140. Diese CQIs werden im Folgenden Soll-CQIs genannt, da sie aus der Information berechnet wurden, mit der das frequenzabhängige Rauschen je Trägerfrequenz simuliert wurde und so die k qualitativ besten Trägerfrequenzen ohne Fehler aus den k am wenigsten verrauschten Trägerfrequenzen bestimmen kann. Werden für die verschiedenen Trägerfrequenzen unterschiedliche Übertragungsparameter verwendet, so muss das bei der Berechnung der Soll-CQIs berücksichtigt werden. So kann z.B. die Verwendung einer fehleranfälligeren 64-QAM Modulation in der rauschärmsten Trägerfrequenz zu einer höheren Fehlerrate als eine relative sichere QPSK Modulation in einer verrauschteren Trägerfrequenz führen. Nach der korrekten Berechnung der Soll-CQIs, werden die Soll-CQIs ebenfalls in die Vergleichsvorrichtung 183 eingegeben.

Die Vergleichseinrichtung 183 vergleicht nun die Soll-CQIs mit den jeweiligen CQIs aus dem Antwortsignal. Das Ergebnis dieses Vergleichs kann aus einem "richtig" /"falsch" Signal bestehen oder es kann im Falle des "falsch" auch die Abweichung zwischen den Soll-CQIs und den jeweiligen CQIs des Antwortsignals näher spezifiziert werden. Hierbei wäre die Anzahl der Abweichungen und /oder die Qualität der einzelnen Abweichungen denkbar, wie z.B. ob anstatt des korrekten Trägers nur der nächste Nachbar verwendet wurde.

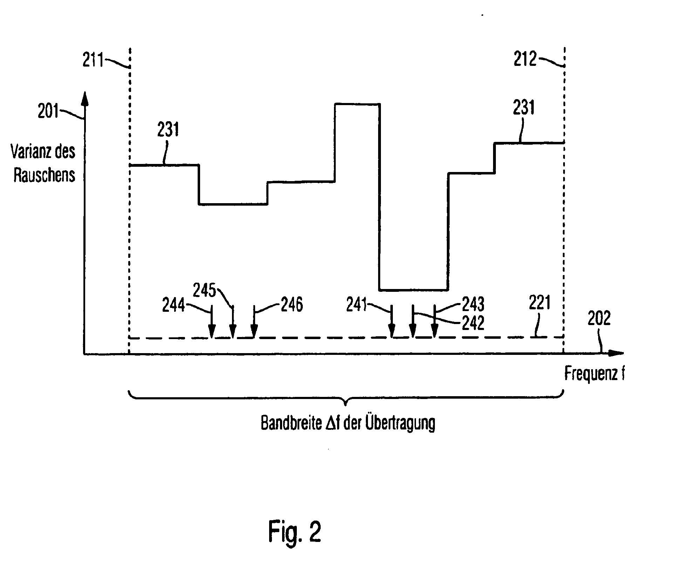

Das Ergebnis wird dann an eine Ergebnisausgabevorrichtung geschickt, wo es z.B. einem Benutzer auf einem Bildschirm angezeigt wird, oder wo es z.B. durch eine Schnittstelle an einen Computer zur weiteren Auswertung geschickt wird. In Fig. 2 wird ein beispielhaftes Muster 231 des frequenzabhängigen Rauschens dargestellt, wie es durch die Verrauschvorrichtung 140 auf die Trägersignale addiert wird. Dabei wird die Varianz des Rauschens 201 über der Frequenz f 202 aufgetragen. Die Bandbreite Δf der Übertragung ist durch die untere 211 und obere 212 Frequenzgrenze markiert. Die Bandbreite Δf ist wiederum in einzelne Trägerfrequenzen oder Trägerfrequenzbereiche 221 unterteilt, die jeweils mit einem jeweiligen Rauschanteil gestört werden. Hier ist nur eine geringe Anzahl von Trägerfrequenzen dargestellt. Bei OFDM Übertragungen liegt die Anzahl der Trägerfrequenzen in einer Größenordnung von 1000.

Das Muster 231 bzw. die Varianz des Rauschens pro Frequenz ist außerhalb der Bandbreite Δf der Übertragung gleich Null. Die Kurve oder hier die Treppenfunktion 231 zeigt den jeweiligen Rauschanteil des jeweiligen Trägersignals 221 für mindestens einen Teil der Trägersignale. In diesem Falle wurden alle Trägersignale 221 mit einem Rauschanteil gestört. Da sich die orthogonalen Gewichtungsfunktionen der Trägerfrequenzen überschneiden und nicht konstant sind, ist 231 in Wirklichkeit keine exakte Treppenfunktion. Die Treppenfunktion 231 ist eine genäherte, idealisierte Darstellung der Rauschanteile pro Trägerfrequenz.

Im Falle der Anwendung des Rauschmusters 231 in der Verrauschvorrichtung 240 würde die Auswahlvorrichtung 241 die Trägerfrequenzen, die mit den Pfeilen 241, 242, 243 gekennzeichnet sind, als die qualitativ besten auswählen, da Sie den geringsten Rauschanteil, d.h. die kleinste Varianz, aufweisen. Diesen würden die mit den Pfeilen 244, 245, 246 markierten Trägerfrequenzen folgen. Das kann so weitergeführt werden, bis die k besten Trägerfrequenzen ausgewählt wurden. So lässt sich der jeweilige Soll-CQI berechnen. Im beschriebenen Beispiel wird davon ausgegangen, dass die Übertragungsparameter wie Sendeleistung, Modulationsart, usw. für alle Trägerfrequenzen gleich gewählt sind, um gleiche Bedingungen für alle Trägerfrequenzen für den Test zu erzielen. Das Testverfahren kann durch die Verwendung unterschiedlicher Übertragungsparameter für verschiedene Trägerfrequenzen erweitert werden, wobei das in der Berechnung des Soll-CQI berücksichtigt werden muss, da z.B. eine PSK Modulation wesentlich weniger Übertragungsfehler erzeugt als eine 64-QAM Modulation.

## Patentansprüche

1. Testgerät (100) zum Testen eines Funkgeräts (150), aufweisend:
eine Abbildungsvorrichtung (121) zum Abbilden zu übertragender Informationen;
eine Verrauschvorrichtung (140) zum Hinzufügen von einem Rauschanteil (141, 142, ..., 143) zu einem Signal (131, 132, ..., 133) für mindestens einen Teil der Signale;
eine Sendevorrichtung (123);
eine Empfangsvorrichtung (160) zum Empfangen eines von dem Funkgerät (150) in Reaktion zurückgesendeten Antwortsignal; und
eine Analysevorrichtung (180) zum Auswerten des Antwortsignals,
**dadurch gekennzeichnet,**
**dass** die Abbildungsvorrichtung eingerichtet ist zum Abbilden der zu übertragenden Informationen auf verschiedene sich hinsichtlich der Trägerfrequenz unterscheidende Signale (131, 132, ..., 133), die Verrauschvorrichtung eingerichtet ist, jeweils einen Rauschanteil selektiv zu jeweils einem Signal einer Trägerfrequenz hinzuzufügen und die Sendevorrichtung eingerichtet ist, die resultierenden verrauschten Signale und nicht verrauschten Signale der verschiedenen Trägerfrequenzen an das Funkgerät (150) zu senden.

2. Testgerät (100) nach Anspruch 1,
**dadurch gekennzeichnet,**
**dass** die Analysevorrichtung (180) so eingerichtet ist, dass sie die Qualität der Übertragung pro Trägerfrequenz aus dem Antwortsignal extrahiert.

3. Testgerät (100) nach einem der Ansprüche 1 bis 2,
**dadurch gekennzeichnet,**
**dass** die Analysevorrichtung (180) eine Auswahlvorrichtung (181, 182) zum Auswählen einer Anzahl qualitativ bester Trägerfrequenzen aufweist.

4. Testgerät (100) nach einem der Ansprüche 1 bis 3,
**dadurch gekennzeichnet,**
**dass** die Analysevorrichtung (180) eine Vergleichseinrichtung (183) aufweist, um die aus dem Antwortsignal extrahierten qualitativ besten Trägerfrequenzen mit zu erwartenden qualitativ besten Trägerfrequenzen zu Vergleichen.

5. Testgerät (100) nach einem der Ansprüche 1 bis 4,
**dadurch gekennzeichnet,**
**dass** die zu erwartenden qualitativ besten Trägerfrequenzen aus den zu den Trägersignalen hinzugefügten Rauschanteilen (141, 142, ..., 143) bestimmt werden.

6. Testgerät (100) nach einem der Ansprüche 1 bis 5,
**dadurch gekennzeichnet,**
**dass** die Abbildungsvorrichtung (121) so eingerichtet ist, dass sie zu übertragende Informationen auf verschiedene sich hinsichtlich der Trägerfrequenz unterscheidende Signale (131, 132, ...,133) abbildet, wobei die Trägerfrequenzen der Signale orthogonal zueinander sind.

7. Testgerät (100) nach einem der Ansprüche 1 bis 6,
**dadurch gekennzeichnet,**
**dass** eine im Testgerät (100) enthaltene Summiervorrichtung (122) die Signale der verschiedenen Trägerfrequenzen vor dem Senden zusammenfügt.

8. Testgerät (100) nach Anspruch 7,
**dadurch gekennzeichnet,**
**dass** die Summiervorrichtung (122) die resultierenden verrauschten bzw. die nicht verrauschten Signale der verschiedenen Trägerfrequenzen mit einer inversen Fouriertransformation in den Zeitraum transformiert und die Ergebnisse dieser Transformationen addiert.

9. Testgerät (100) nach einem der Ansprüche 1 bis 8, **dadurch gekennzeichnet,**
**dass** der zu einem jeweiligen Signal (131, 132, ..., 133) einer Trägerfrequenz jeweils hinzugefügte Rauschanteil ein weißes Rauschen ist.

## Claims

1. Test device (100) for testing a radio device (150), comprising:
a copying device (121) for copying information that is to be transmitted;
a noise adding device (14) for adding a noise component (141, 42, ..., 143) to a signal (131, 132, ..., 133) for at least some of the signals;
a transmitter (123);
a receiver (160) for receiving a response signal sent back in reaction from the radio device (150); and
an analyser (180) for evaluating the response signal,
**characterised in that** the copying device is arranged so as to copy the information that is to be transmitted onto various signals (131, 132, ..., 133) that differ in terms of the carrier frequency, the noise adding device is arranged to add a noise component selectively to a signal of a carrier frequency in each case and the transmitter is arranged to transmit the resulting noise-impaired signals and non-noise-impaired signals of the various carrier frequencies to the radio device (150).

2. Test device (100) according to claim 1, **characterised in that** the analyser (180) is arranged so as to extract the quality of the transmission for each carrier frequency from the response signal.

3. Test device (100) according to one of claims 1 to 2, **characterised in that** the analyser (180) comprises a selecting device (181, 182) for selecting a number of qualitatively best carrier frequencies.

4. Test device (100) according to one of claims 1 to 3, **characterised in that** the analyser (180) has a comparator (183) for comparing the qualitatively best carrier frequencies extracted from the response signal with the qualitatively best carrier frequencies to be expected.

5. Test device (100) according to one of claims 1 to 4, **characterised in that** the qualitatively best carrier frequencies to be expected are determined from the noise components (141, 142, ..., 143) added to the carrier signals.

6. Test device (100) according to one of claims 1 to 5, **characterised in that** the copying device (121) is arranged so that it copies the information that is to be
transmitted onto various signals (131, 132, ..., 133) that differ in terms of the carrier frequency, the carrier frequencies of the signals being orthogonal to one another.

7. Test device (100) according to one of claims 1 to 6, **characterised in that** a summing device (122) contained in the test device (100) combines the signals of the various carrier frequencies before they are sent.

8. Test device (100) according to claim 7, **characterised in that** the summing up device (122) transforms the resulting noise-impaired or non-noise-impaired signals of the various carrier frequencies into the period of time with an inverse Fourier transform and adds together the results of these transforms.

9. Test device (100) according to one of claims 1 to 8, **characterised in that** the noise component added to a respective signal (131, 132, ..., 133) of a carrier frequency is white noise.

## Revendications

1. Appareil de test (100) pour tester un appareil radio (150), présentant:
un dispositif de reproduction (121) pour la reproduction d'informations à transmettre;
un dispositif de bruitage (140) pour l'ajout d'une fraction de bruit (141, 142, ..., 143) à un signal (131, 132, ..., 133) pour au moins une partie des signaux;
un dispositif d'émission (123);
un dispositif de réception (160) pour la réception d'un signal de réponse retourné en réaction par l'appareil radio (150); et
un dispositif d'analyse (180) pour l'analyse du signal de réponse,
**caractérisé en ce que**
le dispositif de reproduction est aménagé pour reproduire les informations à transmettre sur différents signaux (131, 132, ..., 133) qui se différencient en ce qui concerne la fréquence porteuse, le dispositif de bruitage est aménagé pour ajouter à chaque fois une fraction de bruit de façon sélective à respectivement un signal d'une fréquence transporteuse et le dispositif d'émission est aménagé pour envoyer les signaux perturbés en résultant et les signaux non perturbés des différentes fréquences porteuses à l'appareil radio (150).

2. Appareil de test (100) selon la revendication 1, **caractérisé en ce que**
le dispositif d'analyse (180) est aménagé de telle sorte qu'il extrait la qualité de la transmission par fréquence porteuse du signal de réponse.

3. Appareil de test (100) selon l'une des revendications 1 à 2,
**caractérisé en ce que**
le dispositif d'analyse (180) présente un dispositif de sélection (181, 182) pour la sélection d'un nombre de fréquences porteuses optimales au plan qualitatif.

4. Appareil de test (100) selon l'une des revendications 1 à 3,
**caractérisé en ce que**
le dispositif d'analyse (180) présente un dispositif de comparaison (183), pour comparer les fréquences porteuses optimales au plan qualitatif, extraites du signal de réponse, avec des fréquences porteuses optimales au plan qualitatif à escompter.

5. Appareil de test (100) selon l'une des revendications 1 à 4,
**caractérisé en ce que**
les fréquences porteuses optimales au plan qualitatif à escompter sont déterminées à partir des fractions de bruit (141, 142, ..., 143) à ajouter aux signaux porteurs.

6. Appareil de test (100) selon l'une des revendications 1 à 5,
**caractérisé en ce que**
le dispositif de reproduction (121) est aménagé de telle sorte qu'il reproduit des informations à transmettre à différents signaux (131, 132, ..., 133), qui se différencient en ce qui concerne la fréquence porteuse, les fréquences porteuses des signaux étant orthogonales les unes par rapport aux autres.

7. Appareil de test (100) selon l'une des revendications 1 à 6,
**caractérisé en ce**
**qu'**un dispositif totalisateur (122) inclus dans l'appareil de test (100) assemble les signaux des différentes fréquences porteuses avant l'émission.

8. Appareil de test (100) selon la revendication 7,
**caractérisé en ce que**
le dispositif totalisateur (122) transforme les signaux perturbés résultants et les signaux non perturbés en résultant des différentes fréquences porteuses avec une transformation de Fourier inverse dans la période et additionne les résultats de ces transformations.

9. Appareil de test (100) selon l'une des revendications 1 à 8,
**caractérisé en ce que**
la fraction de bruit, ajoutée à un signal respectif (131, 132, ..., 133) d'une fréquence porteuse, est un bruit blanc.
